(19)

**Europäisches Patentamt**
**European Patent Office**
**Office européen des brevets**

(11)  **EP 4 657 137 A1**

(12)  # EUROPEAN PATENT APPLICATION

(43) Date of publication:
**03.12.2025 Bulletin 2025/49**

(21) Application number: **24178985.8**

(22) Date of filing: **30.05.2024**

(51) International Patent Classification (IPC):
*G02B 27/00* (2006.01)       *G02B 27/01* (2006.01)

(52) Cooperative Patent Classification (CPC):
**G02B 27/0093; G02B 27/0172;** G02B 2027/0187

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VoxelSensors SRL**
**1000 Brussels (BE)**

(72) Inventors:
• **Greenberg, Boris**
  **6579402 Tel Aviv Jaffa (IL)**
• **Gopshtein, Michael**
  **7170599 Modiin (IL)**
• **Kashchenevsky, Albert**
  **6912510 Tel Aviv (IL)**
• **Shwartz, Shoam**
  **4534323 Hod Hasharon (IL)**
• **Zimmermann, Yaron**
  **3604109 Kiryat Tivon (IL)**
• **Mercader, Pedro**
  **30709 Roldan (ES)**

(54)  ## IMAGE PROJECTION SYSTEM AND METHOD OF OPERATING THEREOF

(57)    The present invention relates to an image projecting system comprising: an image projecting module configured to provide an image light beam (ILB) projecting image frames to an eye image plane; a sensor assembly configured to provide data indicative of lateral and angular deviations between orientations of the ILB and the eye; an optical assembly configured to direct the ILB to propagate along a propagation path towards the eye, wherein the optical assembly is configured to adjust, in response to actuation signals, an angular orientation and a lateral position of the ILB; and a controller operatively connected to the sensor assembly and to the optical assembly, the controller configured to process the data received from the sensor assembly to generate actuation signals and to send to the optical assembly first actuation signals configured to compensate lateral deviations between the ILB and a lateral position of a pupil of the eye and second actuation signals configured to compensate angular deviations between orientation of the ILB and a gaze direction of the eye, wherein the controller is configured to send the first actuation signals multiple times during each frame and to send the second actuation signals at the beginning of each frame, and wherein each second actuation signal is generated based on a prediction of an angular eye position at the beginning of a respective frame.

Figure 1

**Description**

**TECHNICAL FIELD**

The presently disclosed subject matter relates to techniques of image projection, and more particularly, to methods and systems of projecting pure/augmented virtual reality imagery to user eyes.

**BACKGROUND**

Various systems for projecting virtual reality to the user eye(s) are becoming increasingly popular. Some systems are aimed at providing pure virtual reality image projections to the user eyes, in which light from the external scenery is blocked from reaching the eye(s). Other systems are directed to provide augmented virtual reality perception, in which the light from the external scenery is allowed to pass to the eyes, while also being augmented/superposed by images/video frames projected to the eyes by the image projection systems.

Typically, a conventional projection system projects an image towards the user eyes such that the image is perceived by the user eye as being located/focused at an intermediate image plane located a certain distance in front of the eye (e.g. typically a distance of about 4 to several meters away from the eye). The intermediate image plane, onto which the image is projected, may be a real image plane in front of the eye (i.e. at which the projected light beams forming the image are actually focused) or a virtual image plane (i.e. at which the projected light beams forming the image are perceived to be focused by the user eye). In any case, in such conventional image projection systems, the intermediate image plane has to be optically relayed to the user's eye. In other words, as the intermediate image plane (be it virtual or real image plane) is typically placed at a certain finite distance in front of the eye, it is focused onto the eye retina only when the eye lens focuses to that certain distance.

The alternative projection technique provides direct projection of images directly onto the eye retina (without having an intermediate actual/virtual optical image projection plane external to the eye).

Problems of projection of images onto the eye retina have been recognized in the conventional art and various techniques have been developed to provide solutions, for example:

International Patent Application WO15/132775 discloses an eye projection system including an image generator and an eye projection optical module. The image generator is adapted to obtain data indicative of an image, produce a plurality of light beam portions corresponding to pixels of the image, adjust the intensity of each light beam portion in accordance with a value of a pixel of the image corresponding thereto and direct the light beam portion to propagate along a general optical propagation path towards the eye projection optical module with a projection angle $\alpha_{scn}$, relative to the general optical propagation path, which is determined in accordance with a location of the respective pixel in the image. The eye projection optical module includes a gaze tracking deflector responsive to input signals indicative of a gaze direction beta of a user eye and configured and operable to deflect the general optical propagation path of the light beam portions towards the location of the pupil of the user eye associated with the gaze direction beta. The general optical propagation path is deflected such that the light beam portions incident on the pupil with pupil incidence angles $\alpha_{in}$ with respect to a line of sight of the pupil, where the pupil incidence angles $\alpha_{in}$ correspond to the projection angles $\alpha_{scn}$.

US Patent Application 2018/246336 discloses an eye projection device comprising an eye projection system configured for projecting a light beam to propagate along a propagation path to an eye. The eye projection system comprises: an optical assembly defining a general optical path of light in said optical assembly, the optical assembly comprising a deflector arrangement comprising one or more adjustable optical deflectors arranged along said general optical path and configured to define an adjustable propagation path of the light beam from the optical assembly to the eye; wherein said one or more optical deflectors are configured with at least three adjustable deflection parameters affecting deflection of said propagation path to provide at least three degrees-of-freedom in adjusting the propagation path of said light beam towards said eye; wherein two of said at least three degrees-of-freedom are associated with two angular orientations of the propagation path to the eye for compensating over angular changes in a gaze direction of the eye, and at least one of said at least three degrees-of-freedom are associated with a lateral deflection of the propagation path for compensating over variations in a relative lateral position of said projection system relative to the eye.

US Patent Application 2020/186761 discloses an eye projection system with focusing management. The systems comprise an image projection system for generating a light beam modulated to encode image data indicative of an image to be projected towards a subject's eye along a light beam propagation path; and an optical assembly located in said path for directing the light beam between said image projection system and a retina of said eye; the assembly comprises a light beam divergence assembly for controllably varying focusing properties of said assembly and adjusting divergence of said light beam to thereby affect one or more focusing parameters of one or more portions of said image on the retina.

US Patent Application 2020/174263 discloses a system for retinal image projection. The system includes an image projection module that is configured and operable for projecting at least first and second image portions corresponding respectively to first and second parts of an image to be respectively projected on foveal and peripheral regions of an eye retina; and an optical multiplexing module optically coupled to the image projection module and configured and operable to spatially and/or temporally combine/multiplex the projections of the at least first and second image portions for generating a combined image projection output for propagation along a general common optical path which is to be directed towards said eye retina. The optical multiplexing module is configured and operable to multiplex the projections the first and second image portions such that a lateral extent of the combined projection is similar to a lateral extent of the second image portion in the combined projection which is intended to fall/cover the parafoveal regions of the eye retina, and the lateral extent of the first image portion in the combined projection being smaller and within the lateral extent of the combined projection. The first and second image portions may be projected with different qualities (different resolutions and/or different color depth) and/or with different framerates in accordance with the respective foveal and parafoveally regions of the retina to which there are intended, to the by optimize the image quality/frame rate, and the associated processing and projection capabilities to the anatomical structure of the retina.

International Patent Application WO20/157746 discloses an eye tracking method and device. The method comprises receiving image data indicative of at least two images of a user's eye, identifying, in each image, regions related to the eye limbus; determining geometrical representation of the limbus structure, and determining a three-dimensional position and gaze direction of the user's eye (i.e. full six degrees-of-freedom of the eye) by triangulation of the geometrical representation of the limbus structure of at least two images.

The references cited above assigned to the assignee of the present application. The references teach background information that may be applicable to the presently disclosed subject matter. Therefore, the full contents of these publications are incorporated by reference herein for teachings, where appropriate, of additional or alternative details, features and/or technical background.

## GENERAL DESCRIPTION

In accordance with an aspect of the presently disclosed subject matter, there is provided an image projecting system comprising: an image projecting module configured to provide an image light beam (ILB) projecting image frames to an eye image plane; a sensor assembly configured to provide data indicative of lateral and angular deviations between orientations of the ILB and the eye; an optical assembly configured to direct the ILB to propagate along a propagation path towards the eye, wherein the optical assembly is configured to adjust, in response to actuation signals, an angular orientation and a lateral position of the ILB; and a controller operatively connected to the sensor assembly and to the optical assembly, the controller configured to process the data received from the sensor assembly to generate actuation signals and to send to the optical assembly first actuation signals configured to compensate lateral deviations between the ILB and a lateral position of a pupil of the eye and second actuation signals configured to compensate angular deviations between orientation of the ILB and a gaze direction of the eye, wherein the controller is configured to send the first actuation signals multiple times during each frame and to send the second actuation signals at the beginning of each frame, and wherein each second actuation signal is generated based on a prediction of an angular eye position at the beginning of a respective frame.

In accordance with further aspects and, optionally, in combination with other aspects of the presently disclosed subject matter, the optical assembly can comprise at least one optical deflector with, at least, two degrees of freedom and configured to adjust a lateral position of the ILB in response to the first actuation signals, and at least one optical deflector with, at least, two degrees of freedom and configured to adjust an angular orientation of the ILB in response to the second actuation signals. Alternatively, the optical assembly can comprise at least two optical deflectors, each with at least two degrees of freedom, each deflector configured to adjust a lateral position of the ILB in response to the first actuation signals and an angular orientation of the ILB in response to the second actuation signals.

In accordance with further aspects and, optionally, in combination with other aspects of the presently disclosed subject matter, the sensor assembly can comprise a light port configured to provide a tracking light beam (TLB) configured to propagate towards the eye along the propagation path, at least one first optical sensor and at least one second optical sensor. The at least one first optical sensor can be optically coupled to a general optical path of the optical assembly and be configured to sense the TLB reflected from the eye, thereby obtaining data indicative of the lateral and angular deviations between the TLB and the eye and, respectively, lateral and angular deviations between the ILB and the eye. The at least one second optical sensor can be optically decoupled of the optical assembly and be configured to detect 5 degrees-of-freedom spatial and angular coordinates of the eye, thereby obtaining data indicative of the lateral and angular deviations of ILB. By way of non-limiting example, the at least one first optical sensor can be a position and light sensor and the at least one second optical sensor can be an imaging system. In other embodiments, the sensor assembly can comprise the light port and at least two first optical sensors optically coupled to a general optical path of the optical assembly and configured to sense the TLB reflected from the eye, thereby obtaining data indicative of the lateral and angular deviations between the TLB and the eye and, respectively, lateral and angular deviations between the ILB and the eye.

In accordance with further aspects and, optionally, in combination with other aspects of the presently disclosed subject matter, the controller can be configured to send the first actuation signals at a near-real time rate in accordance with the maximal rate of a lateral response of the optical assembly and/or rendering capabilities of the image projecting module. The first actuation signals can be sent in a closed control loop to reduce the lateral deviation. The controller can be further configured to calculate the angular eye position predicted at the beginning of each next frame, the calculation provided using a predefined model of eye movement and the data received from the sensor assembly, and to generate the second actuation signals in accordance with the calculated predicted angular eye position.

In accordance with another aspect of the presently disclosed subject matter, there is provided a method of operating a system projecting image frames to an eye image plane, the system comprising an optical assembly configured to direct a tracking light beam (TLB) and an image light beam (ILB) over substantially the same propagation path towards the eye. The method comprises: obtaining data indicative of lateral and angular deviations between orientations of the ILB and the eye; processing the obtained data to generate actuation signals and to send to the optical assembly first actuation signals configured to compensate lateral deviations between the ILB and a lateral position of a pupil of the eye and second actuation signals configured to compensate angular deviations between orientation of the ILB and a gaze direction of the eye, wherein the first actuation signals are sent multiple times during each frame and the second actuation signals are sent at the beginning of each frame, and wherein each second actuation signal is generated based on a prediction of an angular eye position at the beginning of a respective frame; and adjusting, by the optical assembly angular orientation and a lateral position of the ILB in response to the actuation signals.

The first actuation signals can be sent at a near-real time rate in accordance with the maximal rate of a lateral response of the optical assembly and/or rendering capabilities of the image projecting module. The first actuation signals can be sent in a closed control loop to reduce the lateral deviation.

The method can further comprise calculating the angular eye position predicted at the beginning of each next frame, the calculation provided using a predefined model of eye movement and the obtained data indicative of lateral and angular deviations between orientations of the ILB and the eye, and generating the second actuation signals in accordance with the calculated predicted angular eye position.

In accordance with further aspects and, optionally, in combination with other aspects of the presently disclosed subject matter, the optical assembly can comprise at least a first and a second optical deflectors each with, at least, two degrees of freedom, the method can further comprise applying the first actuation signals to the first optical deflector to adjust a lateral position of the ILB, and applying the second actuation signals to the second optical deflector to adjust an angular orientation of the ILB. Alternatively, the method can further comprise adjusting a lateral position of the ILB by applying the first actuation signals to the first and to the second optical deflectors and adjusting an angular position of the ILB by applying to the first and to the second optical deflectors the second actuation signals.

In accordance with further aspects and, optionally, in combination with other aspects of the presently disclosed subject matter, obtaining data indicative of lateral and angular deviations between orientations of the ILB and the eye can comprise: providing the tracking light beam (TLB) configured to propagate towards the eye along the propagation path; sensing the TLB reflected from the eye with the help of at least one first optical sensor optically coupled to a general optical path of the optical assembly, thereby obtaining data indicative of the lateral and angular deviations between the TLB and the eye and, respectively, lateral and angular deviations between the ILB and the eye; and detecting spatial and angular coordinates of the eye with the help of the at least one second optical sensor optically decoupled of the optical assembly, thereby obtaining data indicative of the lateral and angular deviations of ILB.

## BRIEF DESCRIPTION OF THE DRAWINGS

In order to understand the invention and to see how it can be carried out in practice, embodiments will be described, by way of non-limiting examples, with reference to the accompanying drawings, in which:

Fig. 1 illustrates a generalized block diagram of an image projecting system in accordance with certain embodiments of the presently disclosed subject matter;

Fig. 2 illustrates a schematic example of time sequence of scanning operation of an image projecting module as known in the art;

Fig. 3 illustrates a generalized flow-chart of operating the image projecting system in accordance with certain embodiments of the presently disclosed subject matter;

Fig. 4 illustrates a generalized block diagram of an eye tracking controller configured in accordance with certain embodiments of the presently disclosed subject matter; and

Figs. 5a and 5b illustrate schematic representations of measurements in eye coordinates.

**EP 4 657 137 A1**

## DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "processing", "calculating", "generating", "obtaining", "predicting" or the like, refer to the action(s) and/or process(es) of a computer that manipulate and/or transform data into other data, said data represented as physical, such as electronic, quantities and/or said data representing the physical objects. The term "computer" should be expansively construed to cover any kind of hardware-based electronic device with data processing capabilities including, by way of non-limiting example, processing and memory circuitry (PMC) in the image projection system disclosed in the present application.

It is to be understood that the term "signal" used herein excludes transitory propagating signals, but includes any other signal suitable to the presently disclosed subject matter.

The operations in accordance with the teachings herein may be performed by a computer specially constructed for the desired purposes or by a general-purpose computer specially configured for the desired purpose by a computer program stored in a non-transitory computer-readable storage medium.

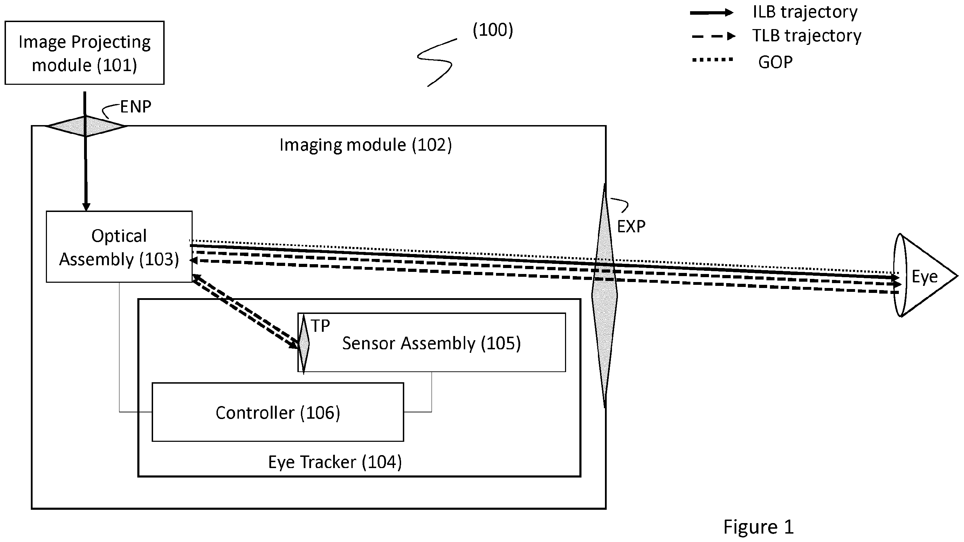

Bearing this in mind, attention is drawn to **Fig. 1** illustrating a generalized block diagram of an image projection system configured to project images directly on a retina of an eye in accordance with certain embodiments of the presently disclosed subject matter.

The term "direct projection" or alike used in this patent specification should be expansively construed to cover focusing a propagating optical field (e.g. image) on an image plane on the user's retina (referred to hereinafter also "eye image plane", such focusing enabled by any kind of arrangements.

The illustrated image projection system **100** comprises an image projecting module **101** optically coupled to an imaging module **102.** Image projecting module **101** is configured to encode at least one light beam in accordance with images to be formed on the retina and output the encoded image light beam (ILB). Imaging module **102** is configured to receive the ILB and direct it in a manner enabling a direct projection of the images to the user's eye(s). Imaging module **102** comprises an entrance optical port (ENP) optically coupled to image projecting module **101** and configured to receive the ILB, and an exit optical port (EXP) configured to output the ILB toward the eye thereby enabling optical path through the imaging module to the eye.

It is noted that the term "optical port" does not necessarily designate a physical element of the system and can be used herein to designate certain planes/apertures (e.g. virtual plane and/or optical surface) which intersect the optical path and across which light respectively enters and exists the imaging module.

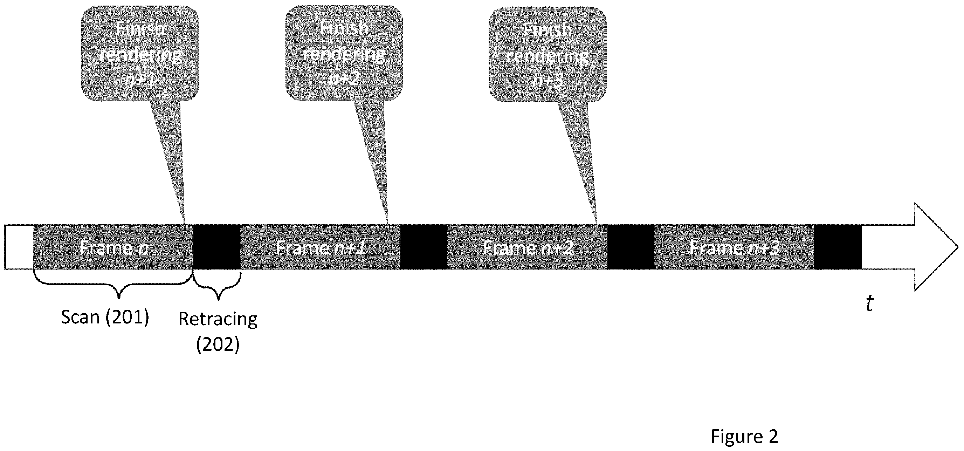

Image projecting module **101** can comprise a light module (not shown) and an image light modulator (not shown) configured to modulate the light beam in accordance with the image to be formed on the retina. The image light modulator can further include an image scanning deflector (e.g. a raster scanning mirror module and/or two dimensionally angularly adjustable/rotatable deflector capable of performing image scan, etc.). The image scanning deflector is configured to change its deflection angle as a function of time so that at different times it deflects the light beam LB to different orientations corresponding to the location of different pixels of the image which is to be projected on the retina. Thus, image scanning deflector enables spatial distribution of the ILB over two-dimensional image plane (display area) on the user's retina. Non-limiting examples of image projecting module are detailed with reference to Figs. 2A and 2B in US Patent Application 2018/246336 assigned to the assignee of the present application and incorporated herewith by reference.

By way of non-limiting example, image projecting module **101** can be configured to enable vertical raster scanning of the display area as illustrated in **Fig. 2.** During a "scan" phase (**201**) ILB scans along vertical dimension to direct light from the light source to the display area, and during a "retrace" phase (**202**) ILB returns, responsive to V-sync signal, to its starting horizontal position for the next scan phase. No new information is displaced during the retrace phase. In a case of 60Hz scanning, each frame consists of 13.4 msec of projection and 3.3 msec of retracing (idle) time. The pixels are rendered 10-20 msec before being projected.

It is noted that the term "beginning of a frame N" used in this patent specification should be expansively construed to cover any point-in-time during retracing between the frame (N-1) and the frame N.

Referring back to **Fig. 1,** imaging module **102** further comprises a controllable and adjustable optical assembly **103** optically located between ENP and EXP and configured to direct the ILB to propagate from ENP via EXP along the image propagation path to the eye.

Imaging module **102** further comprises an eye tracker **104.** Eye tracker **104** comprises a sensor assembly **105** optically coupled to optical assembly **103** and configured to provide data indicative of lateral and angular deviations between orientations of the ILB and the eye, and an eye tracking controller **106** operatively connected to sensor assembly **104** and to optical assembly **103.** Eye tracking controller (ETC) **106** is configured to process data received from the sensor assembly to generate actuation signals and to send the actuations signals to optical assembly **103.**

Sensor assembly **105** can be optically connected with a tracking light source emitting a tracking light beam (TLB). TLB source can emit IR beam invisible to the human eye and directed to propagate along the optical path of the optical assembly of the system while interacting with the one or more adjustable optical deflectors. Sensor assembly **105** comprises a light port (TP) configured to provide the TLB and a plurality of sensors configured to obtain data indicative of the lateral and angular deviations between orientations of the tracking light beam and the eye. At least part of the sensors is configured to sense the tracking light beam reflected from the eye.

Optical assembly **103** is aligned with an output of the image projecting module **101** and tracking light port to receive both the tracking (infrared) light beam and the image light beam and to controllably direct the beams over the propagation path towards the retina (the path is referred to hereinunder also as a general optical path of the optical assembly, GOP) such that the TLB can propagate along the image propagation path to the eye.

Unless specifically stated otherwise, in the following description the image propagation path to the eye and the tracking propagation path to the eye are referred to together as "propagation path" as TLB and ILB share the same propagation path to the eye.

Optical assembly **103** can comprise a plurality of deflectors positioned in any suitable arrangements and at any desired location(s) depending on the implementation. In certain embodiments, the optical assembly can comprise at least one optical deflector with, at least, two degrees-of-freedom and configured to adjust a lateral position of the propagation path towards the eye in response to the actuation signals, and at least one optical deflector with, at least, two degrees-of-freedom and configured to adjust an angular orientation of the propagation path towards the eye in response to actuation signals. Alternatively, optical assembly **103** can comprise at least two optical deflectors, each with at least two degrees-of-freedom, each deflector configured to adjust both lateral and angular positions of the propagation path towards the eye in response to the actuation signals.

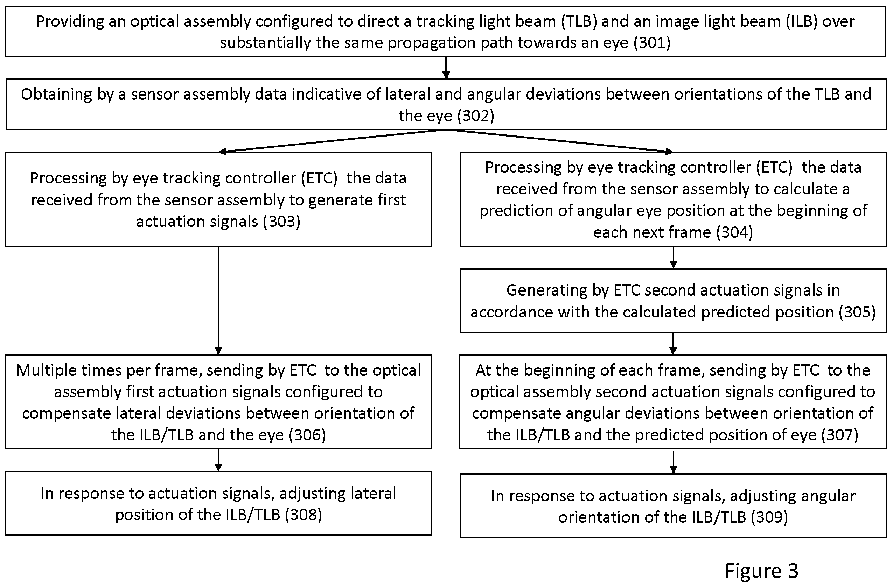

Non-limiting examples of controllable optical assemblies are detailed with reference to Figs. 1A - 1F and Fig. 3A in US Patent Application 2018/246336.

Sensor assembly **105** can comprise one or more first optical sensor optically coupled to the general optical path of the optical assembly and configured to sense light beam reflected from the eye. By way of non-limiting example, the first optical sensor can be a position sensing light detector (PSD), multi-diode array (e.g. quadrant IR light sensor), Time Delay Integration Charge Coupled Device (TDI-CCD), Complementary metal-oxide-semiconductor (CMOS) with Region Of Interest (ROI) selection capability, etc. The measured eye positioning data can be indicative of a deviation between the gaze direction (LOS) of the eye and the orientation of the propagation path of the light beam towards the eye, and/or of a deviation between the lateral (X, Y) position of the pupil of the eye and the propagation path. Thus, the first optical sensors can obtain data indicative of angular deviations between orientations of the light beam and the gaze direction of the eye (referred to hereinafter as "angular deviation") and data indicative of the lateral deviation between the lateral position of the pupil of the eye and the propagation path (referred to hereinafter as "lateral deviation").

Sensor assembly **105** can further comprise one or more second optical sensors which are optically decoupled from the general optical path of the optical assembly (and, accordingly from the first optical sensors). A second optical sensor (e.g. imaging device comprising one or more digital or video cameras, stereo-camera with diffused IR illumination, etc.) can be configured to detect 5 degrees-of-freedom of spatial and angular coordinates of the eye. Optionally, the second sensor can comprise two imaging devices capturing, each at its own angle, images of the user's eye.

Thus, in certain embodiments, the sensor assembly can comprise a light port configured to provide a tracking light beam (TLB), at least one first optical sensor optically coupled to the general optical path of the optical assembly **103** and at least one second optical sensor decoupled from the optical assembly, the first and the second sensors providing data indicative of the lateral and angular deviations of ILB.

In certain other embodiments, the sensor assembly can comprise at least two first optical sensors optically coupled to the general optical path of the optical assembly **103** at at least two different locations. The sensors can be configured to have at least 4 degrees-of-freedom and to measure one or more properties of propagation of the reflected TLB at the two or more different locations and, respectively, provide data indicative of lateral and angular deviations between the ILB and the eye.

By way of non-limiting examples, data indicative of angular and lateral deviations can be obtained by sensing a light beam reflected back from a cornea or a retina of the eye in response to directing of the tracking light beam towards the eye. Data indicative of the angular and lateral deviations can be also obtained by image processing and defining the lateral and angular positions of the light beam with regard to the eye's optical axis (e.g. passing through the center of a pupil or a limbus of the eye).

Non-limiting examples of sensors in sensor assembly **105** are disclosed in US Patent Application 2018/246336, International Patent Application WO20/157746, and International Patent Application PCT/IL2021/050022 assigned to the assignee of the present application and incorporated herewith by reference. Non-limiting examples of obtaining data indicative of angular and lateral deviations by sensing a reflected back light beam are disclosed in Israel Patent Application No. 276354 filed on July 28, 2020, assigned to the assignee of the present application and incorporated herewith by reference.

Eye tracking controller (ETC) **106** is configured to process data received from the sensor assembly to generate actuation signals, and to send the actuation signals to optical assembly **103** as will be further detailed with reference to **Figs. 3 - 5.** Optical assembly **103** is configured to adjust, in response to the actuation signals, an angular orientation and a lateral position of the TLB and, respectively, ILB with respect to the eye.

Thus, in accordance with certain embodiments, image projection system **100** is capable of monitoring both the position of the eye and the line of sight/gaze of the eye/pupil and of respectively directing the projected image(s) onto the retina of the user's eye(s). Due to compensating over changes in the position/location of the eyes, the images can be projected at fixed location on the retina while being unaffected by gaze changes and/or changes in the relative position between the eyes and the projection system.

It is noted that the technique of the presently disclosed subject matter addresses compensation of large movement of the eye (e.g. associated with changes in the gaze direction and/or with a change in the position of the eye-glasses on the face), while small eye movement, such as saccadic movements (tremor), may not be compensated, while still permitting the image to appear completely stable on the fixed location on the retina.

It is also noted that the teachings of the presently disclosed subject matter are not bound by the image projecting system described with reference to **Fig. 1.** Equivalent and/or modified functionality can be consolidated or divided in another manner.

Referring to **Fig. 3,** there is illustrated a generalized flow chart of operating the image projecting system in accordance with certain embodiments of the presently disclosed subject matter.

As detailed above, there is provided (**301**) an image projection system with an optical assembly configured to direct a tracking light beam (TLB) and an image light beam (ILB) over substantially the same propagation path towards an eye. A sensor assembly senses the tracking light beam reflected from the eye and, thereby, obtains (**302**) data indicative of the lateral and angular deviations. High-accurate data indicative of lateral and angular deviation are also obtained (**302**) by processing image(s) captured by image devices.

Eye tracking controller (ETC) processes data received from the sensor assembly to generate (**303**) first actuation signals and sends (**306**) to the optical assembly first actuation signals configured to compensate lateral deviations between ILB/TLB and the eye. ETC sends the first actuation signals multiple times per frame (preferably, in accordance with the maximal rate of a lateral response of the optical assembly and/or rendering capabilities of the image projecting module). In response to the first actuation signals, optical assembly adjusts (**308**) lateral orientation of the ILB/TLB.

In certain embodiments, ETC controller can be configured to generate first actuation signals based, merely, on data received from the first optical sensor(s).

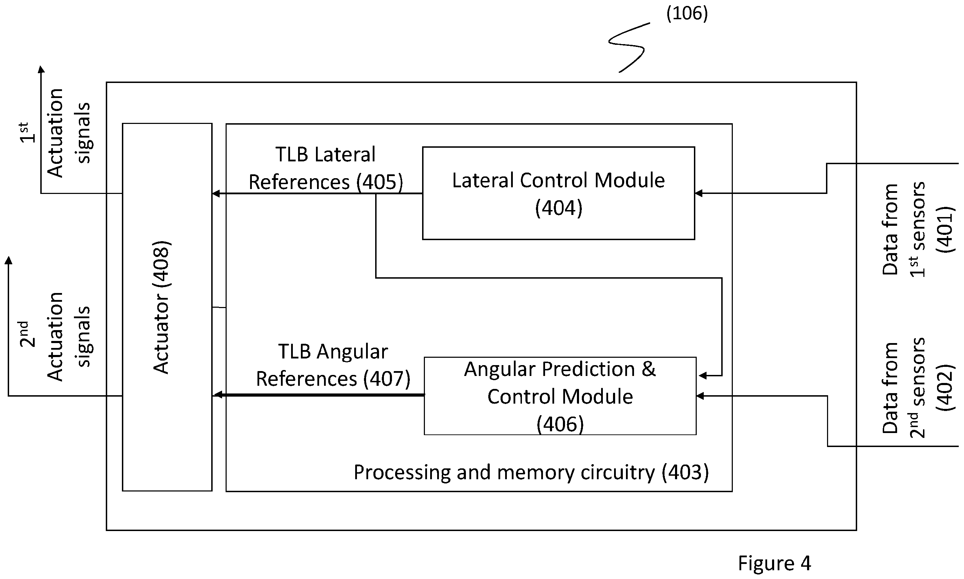

ETC further processes data received from the sensor assembly to calculate (**304**) a predicted angular eye position at the beginning of each next frame and generates (**305**) second actuation signals in accordance with the calculated predicted position. As will be further detailed with reference to **Fig. 4,** ETC generates the second actuation signals using data from the first and the second optical sensors.

At the beginning of each frame, the ETC sends (**307**) to the optical assembly second actuation signals configured to compensate predicted angular deviations between orientation of the TLB (and respectively, ILB) and the predicted position of the eye. In response to the second actuation signals, optical assembly adjusts (**309**) angular orientation of the ILB/TLB. The adjustments of angular orientation can be provided during the retrace phases (e.g. responsive to or in connection with V-sync signals). During the frame projection (scan phase), the angular position of the light beams can be kept constant.

Generating the actuation signals is further detailed with reference to **Fig. 4.**

It is noted that the teachings of the presently disclosed subject matter are not bound by the flow chart illustrated in **Fig. 3,** the illustrated operations can occur out of the illustrated order. For example, operations **303, 306, 308** and **304, 305, 307, 309** shown substantially concurrently can be executed, at least partially, in succession. It is also noted that whilst the flow chart is described with reference to specific elements of the image projecting system, this is by no means binding, and the operations can be performed by elements other than those described herein.

**Fig. 4** illustrates a generalized block diagram of eye tracking controller (ETC) **106** configured in accordance with certain embodiments of the presently disclosed subject matter.

ETC **106** comprises a processing and memory circuitry (PMC) **403** configured to receive data obtained by sensor assembly **105.** It is noted that data obtained by sensor assembly **105** can include data measured by the sensors, images captured by the sensors and/or deviations thereof resulting from an initial processing by the sensor assembly. In certain embodiments, PMC **403** can be configured to receive data **401** from the first sensor(s) separately and at higher rates than data **402** from the second sensor(s). Optionally, ETC **106** can have an input circuitry (not shown) configured to transform and/or pre-process data received from sensor assembly **105.**

PMC **403** comprises a processor and a memory (not shown separately within the PMC). As will be further detailed with reference to **Fig. 4,** PMC **403** can be configured to execute several functional modules in accordance with computer-readable instructions implemented on a non-transitory computer- readable storage medium. Such functional modules are referred to hereinafter as comprised in the PMC. PMC **403** comprises operatively connected a lateral control module **404** and an angular prediction and control module **406.** Lateral control module **404** is configured to process data **401** that it receives from the first sensor(s) to generate TLB lateral references **405** informative of lateral deviations. Angular prediction and control module **406** is configured to process data **402** that it receives from the second sensors and TLB lateral references to calculate a predicted angular position of the eye and to generate TLB angular references **407** in accordance with the predicted position.

In accordance with certain embodiments, angular prediction and control module **406** (referred to hereinafter also as "prediction module") is configured to calculate a predicted angular eye position at the beginning of each frame. Prediction module **406** provides the calculation using a predefined model of angular eye movement and the data indicative of lateral and angular deviations between orientations of the light beam and the eye in respective current frame, these data received from the second sensor(s) and from lateral control module **404.**

Prediction of the angular eye position can be implemented using a linear quadratic estimation (e.g. a Kalman filter) applied to a kinematic model described below. Those skilled in the art will readily appreciate that the teachings of the presently disclosed subject matter are, likewise, applicable to other models of angular eye movement and other prediction techniques (e.g. a non-linear quadratic estimation such as the extended Kalman filter and the unscented Kalman filter, machine learning models, etc.).

PMC **403** is further operatively connected to actuator **408** configured to generate first actuation signals in accordance with TLB lateral references **405** and to generate second actuation signals in accordance with TLB angular references **407.** As detailed above with reference to **Fig. 3,** in response to the first actuation signals, optical assembly adjusts lateral orientation of the ILB/TLB and in response to the second actuation signals, optical assembly adjusts angular orientation of the ILB/TLB. Actuator **408** is configured to send the first actuation signals multiple times during each frame and to send the second actuation signals at the beginning of each frame.

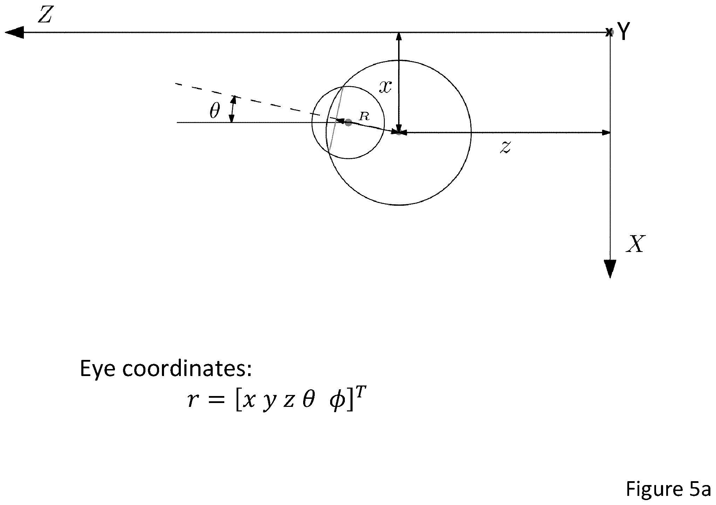

**Fig. 5a** illustrates coordinates characterizing the 5 degrees-of-freedom eye position in the eye coordinate system.

Eye coordinates: $r = [x \, y \, z \, \theta \, \phi]^T$, where $\theta$ and $\varphi$ are pitch and yaw coordinates.

In the case of the first optical sensors (based on TLB reflection), closing lateral control loop on TLB reflection from the eye can provide the following functions of the eye coordinates:

$$\phi_{L1} = f_1(\underline{r}); \; \phi_{L2} = f_2(\underline{r}), \, \ldots, \; \phi_{Ln} = f_n(\underline{r})$$

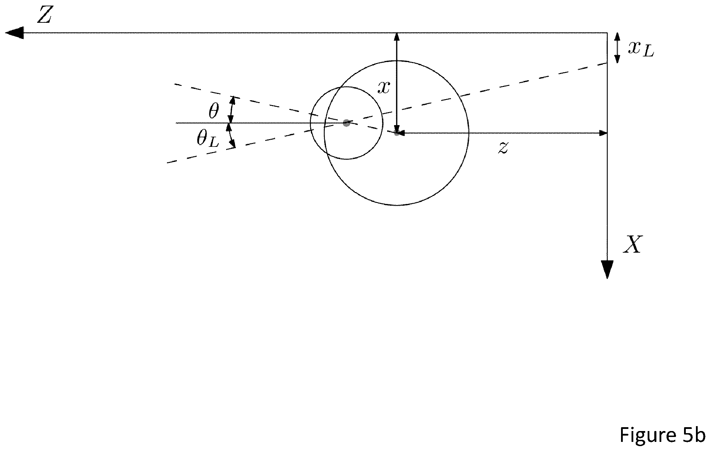

For example, for the cornea reflection with lateral control loop (illustrated in **Fig. 5b),** the function can be described as:

$$\Phi_L \triangleq \begin{bmatrix} x_L \\ y_L \end{bmatrix} = \begin{bmatrix} x + R \sin(\theta) - \tan(\theta_L)(z + R \cos(\theta)) \\ y - R \sin(\phi) \cos(\theta) + \tan(\phi_L)(z + R \cos(\phi) \cos(\theta)) \end{bmatrix}$$

In the case of the second optical sensors (imaging devices), the number of equations is equal to the number of coordinates, thus enabling full information of lateral and angular deviation:

$$\Phi_B = \begin{bmatrix} \tan(\theta) \\ -\tan(\phi) \\ x + R \cdot \sin(\theta) \\ y - R \cdot \cos(\theta)\sin(\phi) \\ z + R \cdot \cos(\theta)\cos(\phi) \end{bmatrix}$$

For the purpose of illustration only, the following description is provided for a kinematic model described below.

$$x(k) = [r(k), \dot{r}(k), \ddot{r}(k)]^T$$

Where x is the state vector of the kinematic model of the eye, $r$ is the coordinate vector of the eye defined before, $\dot{r}(k)$ and $\ddot{r}(k)$ are the coordinate velocity and acceleration, respectively.

The following equation describes general kinematic model of the eye.

$$x(k+1) = f\big(x(k)\big) + w(k)$$

$f$ can be any function that approximates the eye motion, w is the process noise that models the uncertainty of the deterministic eye motion model. $w(k)$ is a stochastic white noise sequence with zero mean normal distribution and given covariance matrix $Q(k) = E\{w(k) \cdot w(k)^T\}$.

$F(k)$ is the linear approximation of the function $f$ above

$$F(k) = \frac{\partial f_i}{\partial x_j}\big|_{x=x(k)}$$

Thus, measurement equations model for the first optical sensor are:

$$\Phi_L = \begin{bmatrix} x(k) + R\sin\big(\theta(k)\big) - \tan(\theta_L)\big(z(k) + R\cos\big(\theta(k)\big)\big) \\ y(k) - R\sin(\phi(k))\cos(\theta(k)) + \tan(\phi_L)(z(k) + R\cos(\phi(k))\cos(\theta(k))) \end{bmatrix} + v_L(k)$$

$$\Phi_L = h_L\big(r(k)\big) + v_L(k)$$

$v_L(k)$ is the 1st sensor measurement noise. It is a stochastic white noise sequence with zero mean normal distribution and given covariance matrix $R_L(k) = E\{v(k) \cdot v(k)^T\}$

$$H_L(k) = \frac{\partial h_{Li}}{\partial x_j}\big|_{x=x(k)}$$

$H_L(k)$ is the linear approximation of the 1st sensor measurement equation.

Measurement equations for the second optical sensor are:

$$\Phi_B(k) = \begin{bmatrix} tan(\theta(k)) \\ -tan(\phi(k)) \\ x(k) + R \cdot sin(\theta(k)) \\ y(k) - R \cdot \cos(\theta(k))\,sin(\phi(k)) \\ z(k) + R \cdot \cos\big(\theta(k)\big)\cos(\phi(k)) \end{bmatrix} + v_B(k)$$

$$\Phi_B(k) = h_B(r(k)) + v_B(k)$$

$v_B(k)$ is the 2nd sensor measurement noise. It is a stochastic white noise sequence with zero mean normal distribution and given covariance matrix $R_B(k) = E\{v(k) \cdot v(k)^T\}$

$$H_B(k) = \frac{\partial h_{Bi}}{\partial x_j}\big|_{x=x(k)}$$

$H_B(k)$ is the linear approximation of the 2nd sensor measurement equation.

Accordingly, in a Kalman-filter estimation time and measurement updates can be expressed as following:

Time update (predictor):

$$\hat{x}(k+1\backslash k) = f(\hat{x}(k\backslash k))$$

$$P(k + 1\backslash k) = FP(k\backslash k)F^T + Q$$

Measurement update (corrector):

$$K(k + 1) = P(k + 1\backslash k)H^T[HP(k + 1\backslash k)H^T + R]^{-1}$$

$$\widehat{\boldsymbol{x}}(k + 1\backslash k + 1) = \widehat{\boldsymbol{x}}(k + 1\backslash k) + K(k + 1)(\boldsymbol{\Phi}(k) - \boldsymbol{h}(\widehat{\boldsymbol{x}}(k + 1\backslash k)))$$

$$P(k + 1\backslash k + 1) = [I - K(k + 1)H]P(k + 1\backslash k)$$

The parameters of the corrector depend on the sensor according to the following table.

| Parameters | Laser measurement system | Cameras measurement system |
|---|---|---|
| $H$ | $H_L$ | $H_B$ |
| $h$ | $h_L$ | $h_B$ |
| $\beta$ | $R_L$ | $h_B$ |
| $\Phi$ | $\Phi_L$ | $\Phi_B$ |

The above non-limiting example demonstrates using a model-based predictor/corrector scheme for estimating an eye position. The above corrections are provided based on the data received from the second sensor(s) and lateral control module **404.**

Prediction module **406** uses the above (or other suitable) model to predict ILB angular position required at the beginning of each next frame and actuator 408 generates the second actuation signals accordingly.

It is noted that the teachings of the presently disclosed subject matter are not bound by the ETC described with reference to **Fig. 4.** Equivalent and/or modified functionality can be consolidated or divided in another manner and can be implemented in any appropriate combination of software with firmware and/or hardware and executed on one or more suitable devices.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.


**Claims**

1.   An image projecting system comprising:

an image projecting module configured to provide an image light beam (ILB) projecting image frames to an eye image plane;
a sensor assembly configured to provide data indicative of lateral and angular deviations between orientations of the ILB and the eye;
an optical assembly configured to direct the ILB to propagate along a propagation path towards the eye, wherein the optical assembly is configured to adjust, in response to actuation signals, an angular orientation and a lateral position of the ILB; and

a controller operatively connected to the sensor assembly and to the optical assembly, the controller configured to process the data received from the sensor assembly to generate actuation signals and to send to the optical assembly first actuation signals configured to compensate lateral deviations between the ILB and a lateral position of a pupil of the eye and second actuation signals configured to compensate angular deviations between orientation of the ILB and a gaze direction of the eye, wherein the controller is configured to send the first actuation signals multiple times during each frame and to send the second actuation signals at the beginning of each frame, and wherein each second actuation signal is generated based on a prediction of an angular eye position at the beginning of a respective frame.

2. The image projecting system of Claim 1, wherein the optical assembly comprises at least one optical deflector with, at least, two degrees of freedom and configured to adjust a lateral position of the ILB in response to the first actuation signals, and at least one optical deflector with, at least, two degrees of freedom and configured to adjust an angular orientation of the ILB in response to the second actuation signals.

3. The image projecting system of Claim 1, wherein the optical assembly comprises at least two optical deflectors, each with at least two degrees of freedom, each deflector configured to adjust a lateral position of the ILB in response to the first actuation signals and an angular orientation of the ILB in response to the second actuation signals.

4. The image projecting system of any one of Claims 1 - 3, wherein the sensor assembly comprises a light port configured to provide a tracking light beam (TLB) configured to propagate towards the eye along the propagation path, at least one first optical sensor and at least one second optical sensor, and wherein

the at least one first optical sensor is optically coupled to a general optical path of the optical assembly and is configured to sense the TLB reflected from the eye, thereby obtaining data indicative of the lateral and angular deviations between the TLB and the eye and, respectively, lateral and angular deviations between the ILB and the eye; and

the at least one second optical sensor is optically decoupled of the optical assembly and is configured to detect 5 degrees-of-freedom spatial and angular coordinates of the eye, thereby obtaining data indicative of the lateral and angular deviations of ILB.

5. The image projecting system of Claim 4, wherein the at least one first optical sensor is a position and light sensor and the at least one second optical sensor is an imaging system.

6. The image projecting system of any one of Claims 1 - 3, wherein the sensor assembly comprises a light port configured to provide a tracking light beam (TLB) configured to propagate towards the eye along the propagation path and at least two first optical sensors optically coupled to a general optical path of the optical assembly and configured to sense the TLB reflected from the eye, thereby obtaining data indicative of the lateral and angular deviations between the TLB and the eye and, respectively, lateral and angular deviations between the ILB and the eye.

7. The image projecting system of any one of Claims 1 - 6, wherein the data indicative of the lateral deviations are indicative of lateral position of a light beam with regard to the eye's optical axis passing through a center of a pupil of the eye.

8. The image projecting system of any one of Claims 1 - 7, wherein the data indicative of the angular deviations are obtained by sensing a light beam reflected back from a cornea or a retina of the eye in response to directing of the TLB towards the eye.

9. The image projecting system of any one of Claims 1 - 8, wherein the controller is configured to send the first actuation signals at a near-real time rate in accordance with the maximal rate of a lateral response of the optical assembly and/or rendering capabilities of the image projecting module.

10. The image projecting system of any one of Claims 1 - 9, wherein the controller is configured to send the first actuation signals in a closed control loop to reduce the lateral deviation.

11. The image projecting system of any one of Claims 1 - 10, wherein the controller is configured to calculate the angular eye position predicted at the beginning of each next frame, the calculation provided using a predefined model of eye movement and the data received from the sensor assembly, and to generate the second actuation signals in accordance with the calculated predicted angular eye position.

12. A method of operating a system projecting image frames to an eye image plane, the system comprising an optical assembly configured to direct a tracking light beam (TLB) and an image light beam (ILB) over substantially the same propagation path towards the eye, the method comprising:

obtaining data indicative of lateral and angular deviations between orientations of the ILB and the eye;
processing the obtained data to generate actuation signals and to send to the optical assembly first actuation signals configured to compensate lateral deviations between the ILB and a lateral position of a pupil of the eye and second actuation signals configured to compensate angular deviations between orientation of the ILB and a gaze direction of the eye, wherein the first actuation signals are sent multiple times during each frame and the second actuation signals are sent at the beginning of each frame, and wherein each second actuation signal is generated based on a prediction of an angular eye position at the beginning of a respective frame; and
adjusting, by the optical assembly angular orientation and a lateral position of the ILB in response to the actuation signals.

13. The method of Claim 12, wherein the optical assembly comprises at least a first and a second optical deflectors each with, at least, two degrees of freedom, the method further comprising applying the first actuation signals to the first optical deflector to adjust a lateral position of the ILB, and applying the second actuation signals to the second optical deflector to adjust an angular orientation of the ILB.

14. The method of Claim 12, wherein the optical assembly comprises at least a first and a second optical deflectors each with, at least, two degrees of freedom, the method further comprising adjusting a lateral position of the ILB by applying the first actuation signals to the first and to the second optical deflectors and adjusting an angular position of the ILB by applying to the first and to the second optical deflectors the second actuation signals.

15. The method of any one of Claims 12 -14, wherein obtaining data indicative of lateral and angular deviations between orientations of the ILB and the eye comprises:

providing the tracking light beam (TLB) configured to propagate towards the eye along the propagation path;
sensing the TLB reflected from the eye with the help of at least one first optical sensor optically coupled to a general optical path of the optical assembly, thereby obtaining data indicative of the lateral and angular deviations between the TLB and the eye and, respectively, lateral and angular deviations between the ILB and the eye; and
detecting spatial and angular coordinates of the eye with the help of the at least one second optical sensor optically decoupled of the optical assembly, thereby obtaining data indicative of the lateral and angular deviations of ILB.

16. The method of Claim 15, wherein the at least one first optical sensor is a position and light sensor and the at least one second optical sensor is an imaging system.

17. The method of any one of Claims 12 - 16, wherein the first actuation signals are sent at a near-real time rate in accordance with the maximal rate of a lateral response of the optical assembly and/or rendering capabilities of the image projecting module.

18. The method of any one of Claims 12 - 17, wherein the first actuation signals are sent in a closed control loop to reduce the lateral deviation.

19. The method of any one of Claims 12 - 18, further comprising calculating the angular eye position predicted at the beginning of each next frame, the calculation provided using a predefined model of eye movement and the obtained data indicative of lateral and angular deviations between orientations of the ILB and the eye, and generating the second actuation signals in accordance with the calculated predicted angular eye position.

Figure 1

Figure 2

Providing an optical assembly configured to direct a tracking light beam (TLB) and an image light beam (ILB) over substantially the same propagation path towards an eye (301)

Obtaining by a sensor assembly data indicative of lateral and angular deviations between orientations of the TLB and the eye (302)

Processing by eye tracking controller (ETC) the data received from the sensor assembly to generate first actuation signals (303)

Processing by eye tracking controller (ETC) the data received from the sensor assembly to calculate a prediction of angular eye position at the beginning of each next frame (304)

Generating by ETC second actuation signals in accordance with the calculated predicted position (305)

Multiple times per frame, sending by ETC to the optical assembly first actuation signals configured to compensate lateral deviations between orientation of the ILB/TLB and the eye (306)

At the beginning of each frame, sending by ETC to the optical assembly second actuation signals configured to compensate angular deviations between orientation of the ILB/TLB and the predicted position of eye (307)

In response to actuation signals, adjusting lateral position of the ILB/TLB (308)

In response to actuation signals, adjusting angular orientation of the ILB/TLB (309)

Figure 3

Figure 4

EP 4 657 137 A1

(106)

1st Actuation signals

2nd Actuation signals

Actuator (408)

TLB Lateral References (405)

Lateral Control Module (404)

TLB Angular References (407)

Angular Prediction & Control Module (406)

Processing and memory circuitry (403)

Data from 1st sensors (401)

Data from 2nd sensors (402)

Eye coordinates:
$$r = [x\,y\,z\,\theta\ \phi]^T$$

Figure 5a

Figure 5b

Europäisches
Patentamt

European
Patent Office

Office européen
des brevets

**EUROPEAN SEARCH REPORT**

Application Number

EP 24 17 8985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/246336 A1 (GREENBERG BORIS [IL]) 30 August 2018 (2018-08-30) <br> * paragraph [0072] - paragraph [0196]; figures 1-5 * | 1-19 | INV. <br> G02B27/00 <br> G02B27/01 |
| A | US 2020/092523 A1 (PEUHKURINEN ARI ANTTI ERIK [FI]) 19 March 2020 (2020-03-19) <br> * paragraphs [0113] - [0120]; figures 1-3 * | 1 | |
| A | US 2023/228998 A1 (PALACIOS DAVID M [US] ET AL) 20 July 2023 (2023-07-20) <br> * paragraphs [0256] - [0260]; figure 37 * | 1 | |
| A | US 10 871 825 B1 (SZTUK SEBASTIAN [US] ET AL) 22 December 2020 (2020-12-22) <br> * columns 16,17 * | 1 | |

TECHNICAL FIELDS
SEARCHED      (IPC)

G02B

The present search report has been drawn up for all claims

| Place of search | Date of completion of the search | Examiner |
|---|---|---|
| Munich | 11 November 2024 | Baur, Christoph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 8985

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2024

| Patent document cited in search report | | Publication date | Patent family member(s) | | Publication date |
|---|---|---|---|---|---|
| US 2018246336 | A1 | 30-08-2018 | AU | 2016314630 A1 | 22-03-2018 |
| | | | CA | 2997086 A1 | 09-03-2017 |
| | | | CN | 108351515 A | 31-07-2018 |
| | | | CN | 117055231 A | 14-11-2023 |
| | | | EP | 3345035 A1 | 11-07-2018 |
| | | | HK | 1256558 A1 | 27-09-2019 |
| | | | JP | 6937517 B2 | 22-09-2021 |
| | | | JP | 2018533049 A | 08-11-2018 |
| | | | KR | 20180048868 A | 10-05-2018 |
| | | | RU | 2018109532 A | 02-10-2019 |
| | | | SG | 10202001835Y A | 29-04-2020 |
| | | | TW | 201716827 A | 16-05-2017 |
| | | | US | 2018246336 A1 | 30-08-2018 |
| | | | WO | 2017037708 A1 | 09-03-2017 |
| US 2020092523 | A1 | 19-03-2020 | NONE | | |
| US 2023228998 | A1 | 20-07-2023 | US | 11953692 B1 | 09-04-2024 |
| | | | US | 2018045960 A1 | 15-02-2018 |
| | | | US | 2019107720 A1 | 11-04-2019 |
| | | | US | 2023228998 A1 | 20-07-2023 |
| | | | US | 2024255761 A1 | 01-08-2024 |
| | | | WO | 2017096241 A1 | 08-06-2017 |
| US 10871825 | B1 | 22-12-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 15132775 A
- US 2018246336 A
- US 2020186761 A
- US 2020174263 A
- WO 20157746 A
- IL 2021050022 W
- IL 276354